# EUROPEAN PATENT SPECIFICATION

(11) **EP 2 602 965 B1**
(45) Date of publication and mention of the grant of the patent: **27.04.2016**
(21) Application number: 11814017.7
(22) Date of filing: 17.01.2011
(51) Int. Cl.: H04L 29/06, H04N 21/432, H04N 21/433, H04N 21/472

(54) **METHOD AND SYSTEM FOR STORING FLOW MEDIA FILE IN PORTABLE TERMINAL**
VERFAHREN UND SYSTEM ZUM SPEICHERN EINER FLUSSMEDIENDATEI IN EINEM TRAGBAREN ENDGERÄT
PROCÉDÉ ET SYSTÈME DE MÉMORISATION DE FICHIER DE FLUX MULTIMÉDIA DANS UN TERMINAL PORTABLE

(30) Priority: 02.08.2010 CN 201010244503
(43) Date of publication of application: 12.06.2013
(73) Proprietor: ZTE Corporation, Shenzhen, Guangdong 518057 (CN)
(72) Inventor: HE, Lipeng, Shenzhen Guangdong 518057 (CN); ZHANG, Shuyan, Shenzhen Guangdong 518057 (CN); WANG, Qiaoming, Shenzhen Guangdong 518057 (CN); PENG, Zaihong, Shenzhen Guangdong 518057 (CN)
(74) Representative: Rapisardi, Mariacristina
(86) International application number: PCT/CN2011/070322
(87) International publication number: WO 2012/016433

(56) References cited:
- EP-A1- 1 770 957
- EP-A1- 2 009 917
- WO-A2-2008/143493
- CN-A- 1 449 195
- CN-A- 1 592 407
- CN-A- 1 941 900
- US-A1- 2003 059 047
- US-A1- 2005 047 404
- US-A1- 2007 288 715

## Description

### Field of the Invention

The present invention relates to the playback field of streaming media files, and in particular to a method and system for storing a streaming media file in a mobile terminal.

### Background of the Invention

With the continuous development of mobile communication, users pay more and more attention to the additional services which can be realized on the mobile terminal, such as cameras, Audio/Video (A/V) playback and the like, wherein the streaming media service is the additional service which both the operators and the users pay high attention to. When transmitting in a streaming media mode, the streaming media file such as sounds, images or animations and the like is transmitted to the mobile terminal of the user in real time by a streaming media server, and the user can watch the file only after a few seconds or more than ten seconds of start-up delay without waiting until the whole file is completely downloaded. During the process of playing the streaming media file on the mobile terminal, the rest part of the file is continuously downloaded from the streaming media server. The streaming media mode transmission not only exponentially shortens the start-up delay of the streaming media file, but also unnecessarily needs too high cache capacity, and the biggest benefit thereof is to overcome the defect that the user only can watch the file by waiting until the whole file is completely downloaded from Internet. Based on the real-time transmission characteristic, the transmission and playback of streaming media needs better network conditions, and also depends on the charge which can be accepted by the user. When the mobile terminal user watches some streaming media resources, the streaming media resources possibly cannot be completely watched from beginning to end for once due to time reasons, and most of the streaming media resources are paid per view; if the user cannot watch through the streaming media resources at once, the user needs to pay again when watching at next time, thus, contradictions may be caused between the operators and the users. Additionally, when the network condition is poor, it needs to interrupt the playback for buffering, thereby, the user cannot continuously watch, and the user experience can be seriously influenced.

US 2003/059047, EP2009917, and EP1770957 provide respective technical solutions; however, the above mentioned problem still remains unsolved.

US2003059047 discloses a PC card video recorder in which an encrypted video stream from a television Set-Top Box is decrypted in the PC card. EP2009917 discloses a data processing device with a separating unit for separating and storing a received stream of data into protected and non-protected data. EP1770957 discloses a method for selecting content such as movie that has not been completely played due to an interruption, and later reading playing information for the non-played content from a storage unit and requesting the non-played content from the server.

### Summary of the Invenion

For that reason, the present invention provides a method and system for storing a streaming media file in a mobile terminal, which can directly store the streaming media file on the mobile terminal, and the interests of both the user and the operator can be consulted. The invention is defined by the independent claims.

The technical solution of the present invention is described as below.

The present invention provides a method for storing a streaming media file in a mobile terminal, and the method comprises the step of:
starting a streaming media transmission;
storing a streaming media file in a background, and marking a playback position of the streaming media file;
setting the stored streaming media file as a hidden file, and/or encrypting the stored streaming media file.

Preferably, after encrypting the streaming media file, the method further comprises:
when the streaming media file is played, reading the stored streaming media file and the marked playback position; limiting a time period which can be played in the streaming media file according to the marked playback position; and automatically deleting the streaming media file after completing playback.

Preferably, the time period which can be played and is limited according to the marked playback position in the streaming media file is a time period between a time point of the playback position and a time point for completing the streaming media file.

Preferably, the step of marking the playback position comprises: adding an int32 type variable which writes the time that the streaming media file has been played to a file header of the streaming media file.

Preferably, the step of marking the playback position further comprises: marking the playback position when a playback process is interrupted during the process of encoding/decoding module and a storage protection module, wherein,
the streaming media interaction module is configured to start a streaming media transmission, and send a received streaming media file to the encoding/decoding module;
the encoding/decoding module is configured to mark a playback position of the streaming media file, and send the streaming media file to the storage protection module so that the streaming media file is stored in a background; and the storage protection module is configured to set the streaming media file which is sent by the encoding/decoding module as a hidden file, and/or encrypt the streaming media file, and store the streaming media file in the background.

Preferably, the system further comprises: a playing module, configured to read the streaming media file which is stored in the storage protection module and the marked playback position via the encoding/decoding module, and implement playback according to a time period which can be played and is limited by the playback position in the streaming media file, automatically delete the streaming media file after the playback is completed.

The method and system for storing the streaming media file in the mobile terminal provided by the present invention can directly store the streaming media file on the mobile terminal, make the user flexibly watch the streaming media file, and also make the streaming media file realize the local playback effect, by starting the streaming media transmission, storing the streaming media file in the background and marking the playback position, setting the stored streaming media file as the hidden file, and/or encrypting the stored streaming media file. Thus, the user can smoothly watch or listen to the services provided by the operators, and the satisfaction degree of the user can be greatly improved. Meanwhile, the identification of the playback position and the copyright protection of the streaming media file will not influence the charge of the operators, while protecting the copyrights of the audio and video files, and being more beneficial to promote the services for the operators.

### Brief Description of the Drawings

Fig. 1 shows a flowchart of a method for storing and playing a streaming media file in a mobile terminal according to the embodiment of the present invention;
Fig. 2 shows a flowchart of a method for playing the stored streaming media file according to the embodiment of the present invention;
Fig. 3 shows a structural diagram of a system for storing and playing a streaming media file in a mobile terminal according to the embodiment of the present invention.

### Detailed Description of the Embodiments

The main idea of the present invention is to make the mobile terminal support the user to watch the streaming media offline, so as to realize the local playback effect of the streaming media; the mobile terminal takes charge of implementing digital copyright protection for the locally-stored streaming media files, without influencing the charge of the operators, while making the users smoothly watch and listen to the services provided by the operators, better improve the satisfaction degree of the users, and being more beneficial to promote the services for the operators. The embodiments of the present invention will be described hereinafter in detail in conjunction with the drawings thereof.

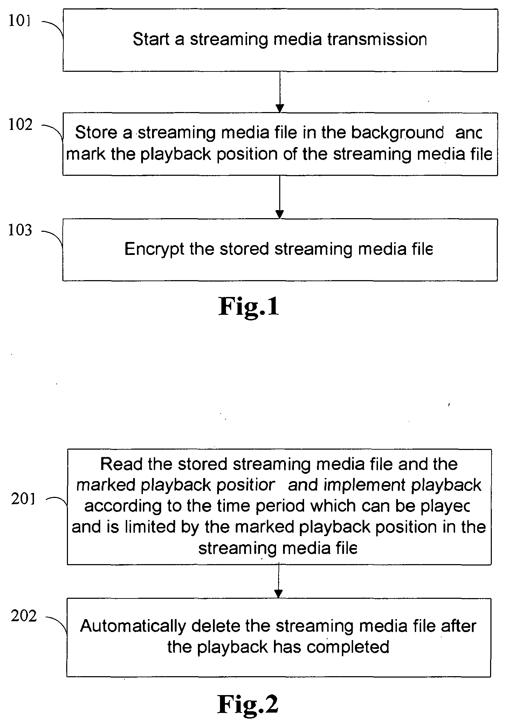

Fig. 1 shows a flowchart of a method for storing and playing a streaming media file in a mobile terminal according to the embodiment of the present invention. As shown in Fig. 1, the method for storing and playing comprises the steps of:
Step 101, starting the streaming media transmission;
   in particular, the mobile terminal establishes connection with a streaming media server via a data link, and then acquires a streaming media file from the streaming media server; wherein the mobile terminal acquires the streaming media file from the streaming media server via a protocol which supports the streaming media transmission, such as a Real Time Streaming Protocol (RTSP), and analyzes the acquired streaming media file according to the protocol. Standard formats for using the RTSP to request the streaming media file are: <request method> <Uniform Resource Identifier (URI)> <RTSP version> [message header] CR/LF [message body]; wherein the request method is DESCRIBE and the like; the URI is an address of the streaming media file. Normally, the user uses Hyper Text Transfer Protocol/Transmission Control Protocol (HTTP/TCP) to exchange control information with a Web server via a Web browser on the mobile terminal to retrieve the information about the streaming media which needs to be transmitted; and then the Web browser of a wireless terminal uses the HTTP to acquire the encoding types of audio and video (A/V) data of the streaming media file, the address of the streaming media file, the copyright information and the like from the Web server via the data link. The mobile terminal sends the request information to the streaming media server according to the address; the streaming media server transmits the streaming media file to the mobile terminal by using the PTSP.
Step 102, storing the streaming media file in the background, and marking the playback position of the streaming media file;
   in particular, background storing the streaming media file and the playback position of the streaming media file in a storage area of the mobile terminal; wherein it comprises two conditions: one is that, the user directly selects offline processing and implements background storage after starting the streaming media playback. At this time, directly writing the received streaming media data into the storage area of the mobile terminal, and marking the playback position as an initial position of the streaming media file. The other is that, after starting the streaming media playback, the user firstly watches the file according to a normal mode, and then triggers the offline processing to store the received streaming media file in the background when needing to implement offline processing. At this time, directly writing the received streaming media data into the storage area of the mobile terminal, and marking the playback position as the time point that the streaming media file has been played to when triggering the offline processing. Marking the playback position is due to the operators usually request pay-per-view for the streaming media file, therefore the stored data can be watched only once by the user, and each time, the watched part cannot be watched again, thus the playback position must be recorded. The method for marking the playback position comprises: adding an int32 type variable which writes the time that the streaming media file has been played to a file header of the streaming media file. The method can be realized via a general encoding/decoding system. For example: firstly jumping to a file header part via a fs_seek command, and then writing an int32 duration data via a fs_write command.
   Further, as the storage capacity or decoding capability of the mobile terminal is limited, during the process of storing the streaming media file in the background, it further can firstly decode the acquired streaming media file, and then select an encoding format with smaller occupation space or better terminal supporting performance according to the principle which is beneficial for storage to re-compress and re-encode the streaming media file, and sends the streaming media file to the mobile terminal again; wherein the re-encoding which is implemented according to the encoding format with better supporting performance can re-encode a received file with a 3GP format according to an MP4 format, and also can implement the re-encoding by using a special encoding format of the operators via matching the demands of the operators, thus the copy of the streaming media file stored in the mobile terminal cannot be decoded and played , and the copyright protection of the streaming media file can be guaranteed. The principle which is beneficial for storage can be set by the user according to personal interests or the performances of the mobile terminal. For example, if the storage space is large enough, and the user has high requirements for the audio and video quality, then the user can set the stored mode as the encoding format which is beneficial for the audio and video quality. In addition, as the mode of marking the playback position of the present invention is to add an int32 type duration data on the file header of the streaming media file, the re-encoding for the streaming media file would not influence the marked playback position, and the duration data can be directly written during the re-encoding process.
Step 103, encrypting the stored streaming media file.

In particular, in order to protect the interests of the operators, the downloaded streaming media file can be played for only once, and cannot be exposed to the user to modify or copy, thereby, the stored streaming media file needs to be encrypted. There are two methods to perform the encryption: one is to set the stored streaming media file as the hidden file, so as to make the stored streaming media file be invisible for the user, and the stored streaming media file only can be connected and played via the player. The other is to encrypt and save the streaming media file by using an encryptor, and make the file only be decrypted and played by using a decryptor which is corresponding to the encryptor and a playback software which match the decryptor. Both the encryption and decryption for the streaming media file can be implemented by employing an existing encryption and decryption technology of the A/V files. The two encryption methods above can be used individually or in combination.

Fig. 2 shows a flowchart of a method for playing the stored streaming media file of the present invention; as shown in Fig. 2, the method comprises:
Step 201, reading the stored streaming media file and the marked playback position, and implementing playback according to the time period which can be played and is limited by the playback position in the streaming media file;
   in particular, the step of reading the stored streaming media file and the marked playback position comprises: if the encryption storage method has been adopted, it still needs to decrypt the streaming media file before playing, and then decode the file via a decoder to play. The step of limiting the time period which can be played in the streaming media file specifically refers to limiting the time period which can be played between the time point of the playback position and the time point for completing the streaming media file according to the read playback position. Thus, it can prevent the user from repeatedly watching the streaming media file.
   Further, during the playback process, if the user wants to interrupt the playback again, the same operation as the Step 102 is adopted to mark the playback position again.
Step 202, automatically deleting the streaming media file after the playback has been completed.

In particular, after the playback has completed, the mobile terminal can calls the fs-delete command to automatically delete the streaming media file which is completely played, so as to protect the interests of the operators, and save the storage space of the mobile terminal.

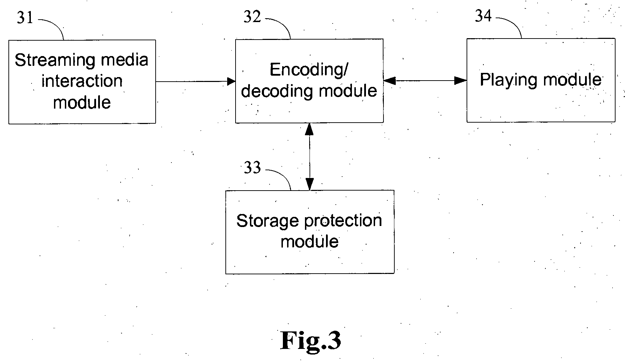

Fig. 3 shows a structural diagram of a system for storing and playing a streaming media file in a mobile terminal of the present invention. As shown in Fig. 3, the system is located in the mobile terminal, and the system comprises: a streaming media interaction module 31, an encoding/decoding module 32 and a storage protection module 33.

The streaming media interaction module 31 is configured to start the streaming media transmission, and send the received streaming media file to the encoding/decoding module 32.

In particular, the streaming media interaction module 31 of the mobile terminal establishes connection with the streaming media server via the data link, and acquires the streaming media file from the streaming media server; wherein the streaming media interaction module 31 acquires the streaming media file from the streaming media server via the protocol which supports the streaming media transmission, such as the RTSP, and resolve the acquired streaming media file. The standard formats for requesting the streaming media file by using the RTSP are: <request method> <URI> <RTSP version> [message header] CR/LF [message body]; wherein the request method is DESCRIBE and the like, and the URI is the address of the streaming media file. Normally, the user uses HTTP/TCP to exchange control information with the Web server via the Web browser on the mobile terminal to retrieve the information about the streaming media which needs to be transmitted; and then the Web browser of the wireless terminal uses the HTTP to acquire the encoding types of A/V data of the streaming media file, the address of the streaming media file, the copyright information and the like from the Web server via the data link. The streaming media interaction module 31 sends the request information to the streaming media server according to the address, and the streaming media server uses the RTSP to transmit the streaming media file to the streaming media interaction module 31.

The encoding/decoding module 32 is configured to mark the playback position, and send the streaming media file to the storage module 33 for storing in the background.

In particular, the encoding/decoding module 32 background stores the streaming media file and the playback position in the storage module 33, which comprising two conditions: one is that, the user directly selects offline processing and implements background storage after starting the streaming media playback. At this time, the encoding/decoding module 32 directly sends the received streaming media data to the storage protection module 33, and marks the playback position as the initial position of the streaming media file. The other is that, after starting the streaming media playback, the user firstly watches the file in the normal mode, and then triggers the offline processing to store the received streaming media file in the background when the offline process is needed. At this time, the encoding/decoding module 32 directly sends the received streaming media data to the storage protection module 33, and marks the playback position as the time point that the streaming media file has been played to when triggering the offline processing. The method for marking the playback position comprises: adding the int32 type variable which writes the time that the streaming media file has been played on a file header of the streaming media file. And this method can be realized via the encoding/decoding module 32.

Further, as the storage capacity or the decoding capability of the mobile terminal is limited, during the process of storing the streaming media file in the background by the encoding/decoding module 32, it further can firstly decode the acquired streaming media file, and then select an encoding format with smaller occupation space or better terminal supporting performance according to the principle which is beneficial for storage to re-compress and re-encode the streaming media file, and send the streaming media file to the storage protection module 33 for storage; wherein the re-encoding which is implemented according to the encoding format with better supporting performance can re-encode a received file with a 3GP format according to an MP4 format, and also can implement re-encoding by using a special encoding mode of the operators via matching the demands of the operators, thus the copy of streaming media file stored in the mobile terminal cannot be decoded and played, and the copyright protection of the streaming media file can be guaranteed. The principle which is beneficial for storage can be set by the user according to the personal interests or the performances of the mobile terminal. For example, if the storage space is large enough, and the user has high requirements for the A/V quality, then the user can set the stored mode as the encoding format which is beneficial for the A/V quality. In addition, as the mode of marking the playback position of the present invention is to add an int32 type duration data on the file header of the streaming media file, the re-encoding for the streaming media file would not influence the marked playback position, and the duration data can be directly written during the re-encoding process.

The storage protection module 33 is configured to encrypt the streaming media file which is sent by the encoding/decoding module 32, and store the file in the background.

In particular, the encryption implemented by the storage protection module 33 comprises: setting the stored streaming media file as the hidden file, and/or encrypting and storing the streaming media file; wherein the step of setting the stored streaming media file as the hidden file refers to making the stored streaming media file be invisible for the user, and the stored streaming media file only can be connected and played via the player; and the encryption and storage for the streaming media file refers to add the encryptor in the storage protection module 33, for encrypting the stored streaming media file, and making the file only be played by using a decryptor which is corresponding to the encryptor and a play software which match the decryptor. Both the encryption and decryption for the streaming media file can use the existing encryption and decryption technology of the A/V files.

Further, when the system for storing the streaming media file needs to play the stored streaming media file, it also comprises: a playing module 34, wherein the playing module 34 is configured to read the streaming media file stored in the storage protection module 33 via the encoding/decoding module 32, and the marked playback position via the encoding/decoding module 32, and implement playback according to the time period which can be played and is limited by the playback position in the streaming media file, automatically delete the streaming media file after the playback has completed.

In particular, the step of reading the streaming media file stored in the storage protection module 33 and the marked playback position comprises: if the encryption method of encryption storage has been adopted, then it also needs to firstly decrypt the streaming media file in the storage protection module 33, and then decode the file via the decoding module, and finally play the decoded streaming media file via the playing module. The operation of limiting the time period which can be played in the streaming media file specifically refers to limiting the time period which can be played between the time point of the playback position and the time point for completing the streaming media file according to the read playback position. Thus, it can prevent the user from repeatedly watching the streaming media file. After the playback has completed, the playing module 34 can call the fs_delete command to automatically delete the streaming media file which is completely played.

Further, during the playback process, if the user wants to interrupt the playback again, the user triggers the offline processing, and marks the playback position again via the encoding/decoding module 32.

The above is only the preferred embodiment of the present invention and not intended to limit the scope of protection of the present invention, and any modifications, equivalent replacements, improvements and the like within the principle of the present invention shall fall within the scope of protection of the present invention.

## Claims

1. A method for storing streaming media file in a mobile terminal, comprising:
starting a streaming media transmission;
when an offline processing to the streaming media is triggered, storing streaming media file in a storage area of the mobile terminal, and marking a playback position of the streaming media file, wherein the playback position is the time point that the streaming media file has been played to when triggering the offline processing;
setting the stored streaming media file as a hidden file, and/or encrypting the stored streaming media file;
when the streaming media file is played again, reading the stored streaming media file and the marked playback position, and limiting a time period which can be played in the streaming media file from the playback position to the end of the streaming media file, wherein the part of the streaming media file that has been played can not be played again, so that the streaming media file can only be played once, and automatically delete the streaming media file after the playback is completed.

2. The method according to claim 1 , **characterized in that** the step of marking the playback position comprises: adding an int32 type variable which writes the time that the streaming media file has been played to a file header of the streaming media file.

3. The method according to claim 1, **characterized in that** the step of marking the playback position further comprises: marking the playback position when a playback process is interrupted during the process of playing the streaming media file.

4. A mobile terminal, **characterized in that** the mobile terminal comprises: a streaming media interaction module (31), an encoding/decoding module (32), and a storage protection module (33), wherein
the streaming media interaction module (31) is configured to start a streaming media transmission, and send a received streaming media file to the encoding/decoding module (32);
the encoding/decoding module (32) is configured to, when an offline processing to the streaming media is triggered, mark a playback position of the streaming media file, and send the streaming media data to the storage protection module (33) so that the streaming media file is stored in a storage area of the mobile terminal, wherein the playback position is the time point that the streaming media file has been played to when triggering the offline processing; and
the storage protection module (33) is configured to set the streaming media data which is sent by the encoding/decoding module (32) as a hidden file, and/or encrypt the streaming media data, and store the streaming media data in the storage area of the mobile terminal;
a playing module, configured to, when the streaming media file is played again, read the streaming media data which is stored in the storage protection module and the marked playback position via the encoding/decoding module, and playback the streaming media file from the playback position to the end of the streaming media file, wherein the part of the streaming media file that has been played can not be played again, so that the streaming media file can only be played once, and automatically delete the stored streaming media data after the playback is completed.

5. The mobile terminal according to claim 4, **characterized in that** the encoding/decoding module (32) marks the playback position comprises: adding an int32 type variable which writes the time that the streaming media file has been played to a file header of the streaming media file.

6. The mobile terminal according to claim 4, **characterized in that** the encoding/decoding module (32) marks the playback position further comprises: marking the playback position when the playback process is interrupted during the process of playing the streaming media file.

## Patentansprüche

1. Verfahren zum Speichern einer Streaming-Mediendatei in einem mobilen Endgerät, umfassend:
das Starten einer Streaming-Medienübertragung;
das Speichern der Streaming-Mediendatei in einem Speicherbereich des mobilen Endgeräts und das Markieren einer Wiedergabeposition der Streaming-Mediendatei, wenn eine Offline-Bearbeitung der Streaming-Medien ausgelöst wird, wobei die Wiedergabeposition der Zeitpunkt ist, bis zu dem die Streaming-Mediendatei beim Auslösen der Offline-Bearbeitung abgespielt wurde;
das Festlegen der gespeicherten Streaming-Mediendatei als verborgene Datei und/oder das Verschlüsseln der gespeicherten Streaming-Mediendatei;
wenn die Streaming-Mediendatei erneut abgespielt wird, das Lesen der gespeicherten Streaming-Mediendatei und der markierten Wiedergabeposition und das Begrenzen eines Zeitraums, der in der Streaming-Mediendatei abgespielt werden kann, von der Wiedergabeposition bis zum Ende der Streaming-Mediendatei, wobei der Teil der Streaming-Mediendatei, der abgespielt wurde, nicht wieder abgespielt werden kann, sodass die Streaming-Mediendatei nur einmal abgespielt werden kann, und das automatische Löschen der Streaming-Mediendatei, nachdem die Wiedergabe beendet wurde.

2. Verfahren nach Anspruch 1, **dadurch gekennzeichnet, dass** der Schritt zum Markieren der Wiedergabeposition umfasst: Hinzufügen einer Variablen vom Typ int32, die die Zeit, bis zu der die Streaming-Mediendatei abgespielt wurde, auf einen Dateivorsatz der Streaming-Mediendatei schreibt.

3. Verfahren nach Anspruch 1, **dadurch gekennzeichnet, dass** der Schritt zum Markieren der Wiedergabeposition zudem umfasst: Markieren der Wiedergabeposition, wenn ein Wiedergabeprozess während des Abspielens der Streaming-Mediendatei unterbrochen wird.

4. Mobiles Endgerät, **dadurch gekennzeichnet, dass** das mobile Endgerät umfasst: ein Streaming-Medien-Interaktionsmodul (31), ein Verschlüsselungs-/Entschlüsselungsmodul (32) und ein Speicherschutzmodul (33), wobei
das Streaming-Medien-Interaktionsmodul (31) ausgelegt ist, um eine Streaming-Medienübertragung zu starten und eine empfangene Streaming-Mediendatei an das Verschlüsselungs-/Entschlüsselungsmodul (32) zu senden;
das Verschlüsselungs-/Entschlüsselungsmodul (32) ausgelegt ist, um eine Wiedergabeposition der Streaming-Mediendatei zu markieren und die Streaming-Mediendaten an ein Speicherschutzmodul (33) zu senden, wenn eine Offline-Bearbeitung der Streaming-Medien ausgelöst wird, sodass die Streaming-Mediendatei in einem Speicherbereich des mobilen Endgeräts gespeichert wird, wobei die Wiedergabeposition der Zeitpunkt ist, bis zu dem die Streaming-Mediendatei abgespielt wurde, wenn die Offline-Bearbeitung ausgelöst wurde, und
das Speicherschutzmodul (33) ausgelegt ist, um die Streaming-Mediendaten, die an das Verschlüsselungs-/Entschlüsselungsmodul (32) übermittelt werden, als eine verborgene Datei festzulegen und/oder die Streaming-Mediendaten zu verschlüsseln und die Streaming-Mediendaten im Speicherbereich des mobilen Endgeräts zu speichern;
ein Abspielmodul ausgelegt ist, die Streaming-Mediendaten, die im Speicherschutzmodul gespeichert sind, und die markierte Wiedergabeposition über das Verschlüsselungs-/Entschlüsselungsmodul zu lesen, wenn die Streaming-Mediendatei erneut abgespielt wird, und die Streaming-Mediendatei von der Wiedergabeposition bis zum Ende der Streaming-Mediendatei wiederzugeben, wobei der Teil der Streaming-Mediendatei, die abgespielt wurde, nicht mehr abgespielt werden kann, sodass die Streaming-Mediendatei nur einmal abgespielt werden kann und die gespeicherten Streaming-Mediendaten automatisch gelöscht werden, nachdem die Wiedergabe beendet wurde.

5. Mobiles Endgerät nach Anspruch 4, **dadurch gekennzeichnet, dass** das Verschlüsselungs-/Entschlüsselungsmodul (32), das die Wiedergabeposition markiert, umfasst: das Hinzufügen einer Variablen vom Typ int32, die die Zeit, bis zu der die Streaming-Mediendatei abgespielt wurde, auf einen Dateivorsatz der Streaming-Mediendatei schreibt.

6. Mobiles Endgerät nach Anspruch 4, **dadurch gekennzeichnet, dass** das Verschlüsselungs-/Entschlüsselungsmodul (32), das die Wiedergabeposition markiert, Folgendes umfasst: Markieren der Wiedergabeposition, wenn der Wiedergabeprozess während des Abspielens der Streaming-Mediendatei unterbrochen wird.

## Revendications

1. Procédé de mémorisation d'un fichier de contenu multimédia dans un terminal mobile, comprenant :
le démarrage d'une transmission de contenu multimédia ;
lorsque qu'un processus hors ligne vers le contenu multimédia est déclenché, mémoriser le fichier de contenu multimédia dans une zone de mémoire du terminal mobile et marquer une position de lecture du fichier de contenu multimédia, dans lequel la position de lecture est l'heure à laquelle le fichier de contenu multimédia a été lu lors du déclenchement du processus hors ligne ;
définir le fichier de contenu multimédia comme étant un fichier caché, et/ou crypter le fichier de contenu multimédia mémorisé ;
lorsque le fichier de contenu multimédia est à nouveau lu, lire le fichier de contenu multimédia mémorisé et la position de lecture marquée et limiter une durée de lecture dans le fichier de contenu multimédia à partir de la position de lecture jusqu'à la fin du fichier de contenu multimédia, dans lequel la partie du fichier de contenu multimédia qui a été lue ne peut plus être lue à nouveau, de sorte que le fichier de contenu multimédia ne puisse être lu qu'une seule fois et que le fichier de contenu multimédia soit automatiquement supprimé une fois la lecture terminée.

2. Procédé selon la revendication 1, **caractérisé en ce que** l'étape consistant à marquer la position de lecture comprend : l'ajout d'une variable de type int32 qui inscrit la durée de lecture du fichier de contenu multimédia sur une en-tête de fichier du fichier de contenu multimédia.

3. Procédé selon la revendication 1, **caractérisé en ce que** l'étape consistant à marquer la position de lecture comprend de plus : le marquage de la position de lecture lorsqu'un processus de lecture est interrompu lors du processus de lecture du fichier de contenu multimédia.

4. Terminal mobile, **caractérisé en ce que** le terminal mobile comprend : un module d'interaction de contenu de multimédia (31), un module d'encodage/décodage (32) et un module de protection mémoire (33), dans lequel le module d'interaction de contenu multimédia (31) est configuré pour démarrer une transmission de contenu multimédia et pour envoyer un fichier de contenu multimédia reçu au module d'encodage/décodage (32) ;
le module d'encodage/décodage (32) est configuré pour, lorsqu'un processus hors ligne vers le contenu multimédia est déclenché, marquer une position de lecture du fichier de contenu multimédia et envoyer les données de contenu multimédia au module de protection mémoire (33) de sorte que le fichier de contenu multimédia soit mémorisé dans une zone de mémoire du terminal mobile, dans lequel la position de lecture est l'heure à laquelle le fichier de contenu multimédia a été lu lors du déclenchement du processus hors ligne ; et le module de protection mémoire (33) est configuré pour définir les données de contenu multimédia étant envoyées par le module d'encodage/décodage (32) comme étant un fichier caché, et/ou crypter les données de contenu multimédia et mémoriser les données de contenu multimédia dans la zone mémoire du terminal mobile ; module de lecture, configuré pour, lorsque le fichier de contenu multimédia est à nouveau lu, lire les données de contenu multimédia étant mémorisées dans le module de protection mémoire et la position de lecture marquée via le module d'encodage/décodage et lire le fichier de contenu multimédia à partir de la position de lecture jusqu'à la fin du fichier de contenu multimédia, dans lequel la partie du fichier de contenu multimédia qui a été lue ne peut plus être lue à nouveau, de sorte que le fichier de contenu multimédia ne puisse être lu qu'une seule fois et que les données de contenu multimédia soient automatiquement supprimées une fois la lecture terminée.

5. Terminal mobile selon la revendication 4, **caractérisé en ce que** le module d'encodage/décodage (32) marquant la position de lecture comprend : l'ajout d'une variable de type int32 qui inscrit la durée de lecture du fichier de contenu multimédia sur une en-tête de fichier du fichier de contenu multimédia.

6. Terminal mobile selon la revendication 4, **caractérisé en ce que** le module d'encodage/décodage (32) marquant la position de lecture comprend de plus : le marquage de la position de lecture lorsque le processus de lecture est interrompu lors du processus de lecture du fichier de contenu multimédia.
